Europäisches Patentamt

(19) European Patent Office

Office européen des brevets

(11) Veröffentlichungsnummer: **0 115 819**
**B1**

# (12) EUROPÄISCHE PATENTSCHRIFT

(45) Veröffentlichungstag der Patentschrift:
14.01.87

(51) Int. Cl.⁴: **F 16 N 7/32, F 16 N 23/00**

(21) Anmeldenummer: **84100759.4**

(22) Anmeldetag: **21.01.84**

(54) Vorrichtung für die Zufuhr von Nebel mit Druckverstärker.

(30) Priorität: **24.01.83 JP 588127/83**

(43) Veröffentlichungstag der Anmeldung:
**15.08.84 Patentblatt 84/33**

(45) Bekanntmachung des Hinweises auf die Patenterteilung:
**14.01.87 Patentblatt 87/3**

(84) Benannte Vertragsstaaten:
**DE FR GB IT SE**

(56) Entgegenhaltungen:
**EP-A-0 102 603**
**DE-A-1 503 550**
**FR-A-1 319 612**
**FR-A-1 577 915**
**GB-A-2 017 223**
**GB-A-2 057 095**
**US-A-3 753 528**
**US-A-3 862 544**
**US-A-3 890 064**

(73) Patentinhaber: **Shoketsu Kinzoku Kogyo Kabushiki Kaisha, 1-16- 4, Shimbashi Minato- ku, Tokio (JP)**

(72) Erfinder: **Nakai, Hisao Shoketsu Kinzoku Kogyo Co., Ltd., Soka Plant 938 Inari- cho, Soka- City Saitama Prefecture (JP)**

(74) Vertreter: **Keil, Rainer A., Dipl.- Phys. Dr., Patentanwälte KEIL & SCHAAFHAUSEN Ammelburgstrasse 34, D-6000 Frankfurt am Main 1 (DE)**

EP 0 115 819 B1

## Beschreibung

Die Erfindung bezieht sich auf eine Vorrichtung zur Zufuhr von Flüssigkeit, insbesondere Öl, zu pneumatischen Werkzeugen, Zylindern, Ventilen oder anderen pneumatischen Geräten, mit einem Hauptluftströmungsweg, mit einer Luftaufnahme in dem Hauptluftströmungsweg, mit einem Leitungsweg, welcher mit der Luftaufnahme in Strömungsverbindung steht, mit einem die Flüssigkeit aufnehmenden Tank, welcher mit einem ein Rückschlagventil aufweisenden Leitungsweg für das Zuführen der Flüssigkeit zum Hauptluftströmnungsweg in Strömungsverbindung steht, und mit einem Rückschlagventil in dem Hauptluftströmungsweg für die Verhinderung einer Rückströmung.

Eine solche Vorrichtung ist aus der US-A 3 862 544 bekannt. Hiernach wird ein konstanter Schmiermittelstrom an ein pneumatisches Werkzeug geführt. Zu diesem Zweck hat die Vorrichtung eine Pumpenkammer mit einer Aufnahmeöffnung, die mit einem Schmiermittelvorratstank in Verbindung steht, sowie eine Abgabeöffnung für das Wegführen des Schmiermittels zu dem Werkzeug. Ein Hauptluftströmungsweg ist an eine Luftdruckquelle für den Antrieb des Werkzeuges angeschlossen. Ein normalerweise geschlossenes Steuerventil regelt die Strömung durch den HauPtluftströmungsweg. Bei Druckabfall über dem Ventil öffnet es. Die Pumpenkammer wird in Abhängigkeit von dem Luftstrom abwechselnd expandiert und kontrahiert, wodurch das Schmiermittel zu den Arbeitsflächen des Werkzeuges gefördert wird. Für jeden Verbraucher ist eine einzelne Zufuhrvorrichtung erforderlich.

Aufgabe der vorliegenden Erfindung ist die Schaffung einer Vorrichtung der eingangs genannten Art, mit welcher selbstregelnd fein verteilte Flüssigkeit in Form von Nebel unter stabilem Förderdruck dem Hauptluftströmungsweg zugeführt wird. Gegenüber der in der nicht vorveröffentlichten europäischen Patentanmeldung 83 106 456.1 (EP-A 102 603) vorgeschlagenen Lösung soll zusätzlich erreicht werden, daß der Druckverstärker schnell mit der Nutzung des Nebels unterbrochen werden kann, so daß eine weitere Erzeugung von Nebel verhindert und dadurch die Wirtschaftlichkeit verbessert wird.

Diese Aufgabe wird erfindungsgemäß dadurch gelöst daß ein Paar einander gegenüberliegender Zylinder einer Drucksteigerungspumpe vorgesehen ist, deren kopfseitigen Enden jeweils über Rückschlagventile mit Zweigleitungswegen in Strömungsverbindung stehen, welche von dem Leitungsweg abzweigen, daß das Paar von Zylindern jeweils Kolben aufnimmt, die miteinander über einen Stab verbunden sind, daß jeweils ein Umschaltventil an den Hubenden der Kolben vorgesehen ist und durch von bei den Kolben gesteuert durch ein Richtungsumschalventil betätigt wird, daß ein Differenzdruckregulierventil, welches mit dem Leitungsweg in Strömungsverbindung steht, vorgeshen ist so daß ein eingestellter Druck von dem Differenzdruckregulierventil über Leitungswege zu dem jeweiligen stabseitigen Ende der Zylinder geführt wird, daß eine als Nebelerzeugerdüse wirkende Mündung vorgesehen ist, welche sich in den Tank mit der zuzuführenden Flüssigkeit öffnet, daß die kopfseitigen Enden der Zylinder über weitere Rückschlagventile mit einem Leitungsweg in Strömungsverbindung stehen,welcher zu der Mündung führt, daß der Leitungsweg von dem Tank zu einer Nebelzuführungsöffnung an dem Hauptluftströmungswegführt und daß das Rückschlagventil in dem Haupluftströmungsweg zwischen der Luftaufnahme und der Nebelzuführungsöffnung liegt.

Hierdurch wird eine Versorgung fein verteilter Flüssigkeit in Form von Nebel mit einem Druckverstärker erreicht, wobei ein stabiler Förderdruck unter Verwendung des gesamten Luftdruckes und unter Anwendung einer Selbstregelung erhalten wird, um das Umschaltventil am Hubende für das Infunktionsetzen der Drucksteigerungspumpe zu betätigen, während das Differenzdruckregulierventil benutzt wird, um den Differenzdruck einzustellen und die Veränderung des Differenzdruckes so gering wie möglich durch Rückkopplung des Förderdruckes zu halten. Ferner wird die Zufuhr des erhöhten Druckes mit dem Ende der Benutzung des Flüssigkeitsnebels unterbrochen, um die Erzeugung von Nebel schnell zu unterbrechen.

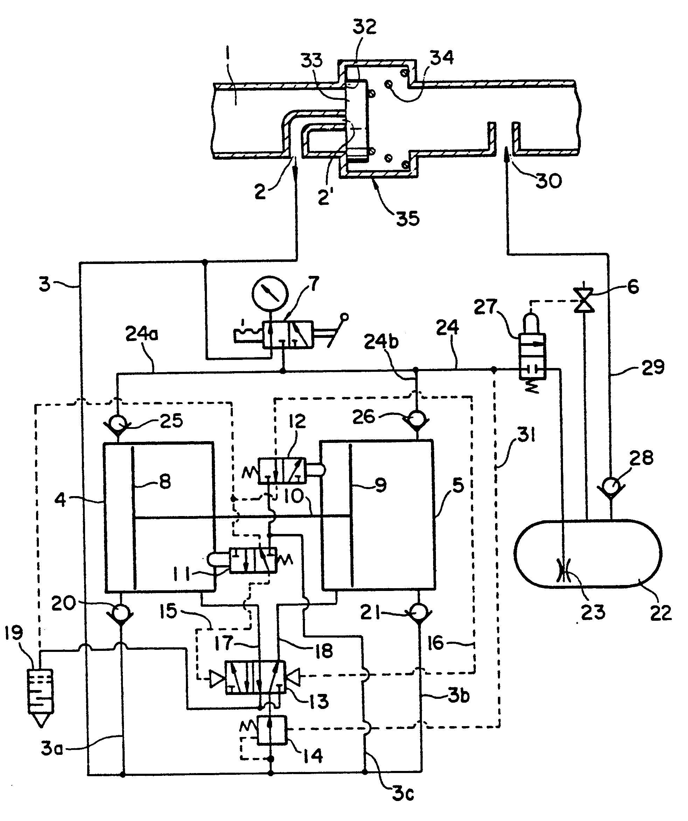

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnung.

Die einzige Figur veranschaulicht ein Schaltdiagramm einer die Erfindung aufweisenden Vorrichtung.

In der Zeichnung ist teilweise weggebrochen ein Hauptluftströmungsweg 1 dargestellt. In der folgenden Beschreibung dient der Hauptluftströmungsweg 1 als Olnebelversorgungsleitung zu einer Maschine, z.B. einer Werkzeugmaschine. Der Hauptluftströmungsweg 1 hat eine eine Luftauslaßöffnung darstellende Luftaufnahme 2, welche über einen Leitungsweg 3 und Zweigleitungswege 3a und 3b zu den stirnseitigen Enden eines paares einander gegenüberliegender Zylinder 4, 5 von Drucksteigerungspumpen in Verbindung steht.

Die Zylinder 4 und 5 nehmen jeweils Kolben 8 und 9 auf, welche gleitend gas- und wasserdicht eingepaßt und miteinander über eine Stange bzw. einen Stab 10 verbunden sind. Am Hubende der Kolben 8 und 9 auf der Seite des Stabes 10 sind Umschaltventile 11, 12 zur Richtungssteuerung vorgesehen, die von den Kolben 8 und 9 geschaltet werden. Ein weiteres Richtungsumschaltventil 13, welches über die Leitung 3 an ein Differenzdruckregulierventil 14 angeschlossen ist, wird von den Umschaltventilen 11, 12 geschaltet. Ein pneumatischer Druck, welcher von einem pneumatischen Druck eingestellt wird, der von den Umschaltventilen 11, 12 über Leitungswege 15, 16 abgeleitet wird, wird wahlweise von dem Richtungsumschaltventil 13 über Leitungswege 17, 18 zu dem jeweiligen stabseitigen Ende der Zylinder 4, 5 geführt. Die Abgabeseite der Umschaltventile 11, 12 und des Richtungsumschaltventils 13 steht mit Atmosphäre über einen Austrittsreiniger 19 in Verbindung. Luft, die zur Betätigung der Umschaltventile 11, 12 unter Druck steht, wird über einen Zweigleitungsweg 3c, der von dem Leitungsweg 3 abzweigt, zugeführt.

Die Zweigleitungswege 3a, 3b sind mit jeweiligen Rückschlagventilen 20 und 21 ausgerüstet, welche lediglich eine Strömung in Richtung der Zylinder 4, 5 zulassen. Die Zylinder 4 und 5 stehen über Rückschlagventile 25, 26 in Verbindung, die eine Strömung lediglich in Ausströmrichtung bezüglich der Zylinder 4 und 5 in Zweigleitungswege 24a, 25b zulassen die von einem Leitungsweg 24 abzweigen, welcher mit einem Tank 22 in Verbindung steht. Der Tank 22 enthält die zu vernebelnde Flüssigkeit; es ist also im dargestellten Ausführungsbeispiel ein Öltank. Der Leitungsweg 24 ist zu einem unteren Abschnitt des Tanks 22 über eine als Nebelerzeugerdüse wirkende Mündung 23 geöffnet. Zur wahlweisen Überwachung des Druckes der Leitungswege 3 und 24 ist eine Druckabfühleinrichtung 7 vorgesehen.

Ein Umschaltventil 27, welches vom Öffnen und Schließen eines Ölzufuhrventils 6 auf- und zugeschaltet wird, ist in dem Leitungsweg 24 vorgesehen. Der Tank 22 ist über ein Rückschlagventil 28, welches eine Strömung lediglich in Richtung aus dem Tank 22 zuläßt, an einen Leitungsweg 29 angeschlossen, der mit dem Hauptluftströmungsweg 1 über einer Nebelzuführungsöffnung 30 für den gebildeten Flüssigkeitsnebe in Verbindung steht. Ein Leitungsweg 31 zweigt von dem Leitungsweg 24 ab und führt zu dem Differenzdruckregulierventil 14 zurück.

Der Hauptluftströmungsweg 1 hat einen Ventilsitz 32, der in seinem Abschnitt zwischen der Luftaufnahme 2 und der Nebelzuführungsöffnung 30 für Flüssigkeitsnebel ausgebildet ist. Ein Ventilglied 33 sitzt von Seiten der Nebelzuführungsöffnung 30 auf dem Ventilsitz 32 auf und wird gegen den Ventilsitz 32 von einer Feder 34 gedrückt. Diese Anordnung bildet ein Rückschlagventil 35, welches die Rückströmung in Richtung der Luftaufnahme 2 von der Nebelzuführungsöffnung 30 aus blockiert. Die Lagebeziehung zwischen der Öffnung 2' der Luftaufnahme 2 und dem Ventilglied 33 ist dazu bestimmt, daß die Luftaufnahme 2 geschlossen ist, sobald das Ventilglied 33 auf dem Ventilsitz 32 aufsitzt.

Wenn im Betrieb das Ventilglied 33 gegen die Kraft der Feder 34 durch den Luftdruck in dem Hauptluftströmungsweg 1 gemäß der zeichnerischen Darstellung geöffnet wird, wird Luft über den Leitungsweg 3 und die Zweigleitungswege 3a und 3b zu den kopfseitigen Kammern der Zylinder 4, 5 geführt, während ein eingestellter Druck über das Differenzdruckregulierventil 14 zu der stabseitigen Kammer des Zylinders 5 über das Richtungsumschaltventil 13 geführt wird. Folglich wird ein Druck, welcher das Ergebnis der Erhohung des Druckes ist, der zur kopfseitigen Kammer des Zylinders 5 über den Leitungsweg 3b geführt wird, durch einen Druck, der zu der stabseitigen Kammer geführt wird, über den Leitungsweg 24 zu der Mündung 23 in dem Tank 22 geführt. Der von der Mündung 23 erzeugte Nebel wird über den Leitungsweg 29 geleitet, um dem Hauptluftströmungsweg 1 über die Nebelzuführungsöffnung 30 zugeführt zu werden, damit er mit dem Luftstrom in dem Hauptluftströmungsweg seinem vorbestimmten Ziel zugeführt wird. Wenn die Kolben 8, 9 (in der Zeichnung) nach rechts bewegt werden und ihr Hubende erreichen, wird das Umschaltventil 11 von dem Kolben 8 geschaltet. Als Folge davon wird das Richtungsumschaltventil 13 geschaltet. Der von dem Differenzdruckregulierventil 14 eingestellte Druck wird nun der stabseitigen Kammer des Zylinders 4 zugeführt, um eine Verschiebungdes Kolbens 8 nach links zu bewirken, während die erhöhte Druckluft über den Leitungsweg 24 der Mündung 23 zugeleitet wird, so daß ein kontinuierlicher Betrieb erfolgt. Während dieses kontinuierlichen Betriebes kann eine konstante Nebelmenge dem Hauptluftströmungsweg 1 zugeführt werden. In diesem Falle wird der Druck in dem Leitungsweg 24 über den Leitungsweg 31 zu dem Differenzdruckregulierventil 14 zurückgeführt, so daß es möglich ist, Veränderungen des Differenzdruckes festzustellen und eine Vernebelung mit einem stabilen Differenzdruck sicherzustellen.

Wenn die Verwendung von Nebel auf der Seite der Abnahmevorrichtung unterbrochen wird, so daß der Druck auf dieser Seite ansteigt, wird das Ventilglied 33 des Rückschlagventiles 35 auf den Ventilsitz 32 gedrückt, während gleichzeitig die Luftaufnahme 2 geschlossen wird, um den Betrieb der Drucksteigerungspumpe zu unterbrechen, so daß auch die unter erhöhtem Druck stehende Luft zu der Mündung 23 unterbrochen wird. Auf diese Weise wird die Erzeugung von unerwünschtem Nebel verhindert.

**Patentanspruch**

Vorrichtung für die Zufuhr von Flüssigkeit mit einem Hauptluftströmungsweg (1), mit einer Luftaufnahme (2) in dem Hauptluftströmungsweg (1), mit einem Leitungsweg (3), welcher mit der Luftaufnahme (2) in Strömungsverbindung steht, mit einem die Flüssigkeit aufnehmenden Tank (22), welcher mit einem ein Rückschlagventil (28) aufweisenden Leitungsweg (29) für das Zugführen der Flüssigkeit zu dem Hauptluftströmungsweg (1) in Strömungsverbindung steht, und mit einem Rückschlagventil (35) in dem Hauptluftströmungsweg (1) für die Verhinderung einer Rückströmung,

dadurch gekennzeichnet daß ein Paar einander gegenüberliegender Zylinder (4, 5) einer Drucksteigerungspumpe vorgesehen ist, deren kopfseitigen Enden jeweils über Rückschlagventile (20, 21) mit Zweigleitungswegen (3a, 3b) in Strömungsverbindung stehen, welche von dem Leitungsweg (3) abzweigen, daß das Paar von Zylindern (4, 5) jeweils Kolben (8, 9) aufnimmt, die miteinander über einen Stab (10) verbunden sind, daß jeweils ein Umschaltventil (11; 12), die an den Hubenden der Kolben (8, 9) vorgesehen ist und von bei den Kolben (8, 9) durch ein Richtungsumschaltventil (13) gesteuert betätigt wird, daß ein Differenzdruckregulierventil (14), welches mit dem Leitungsweg (3) in Strömungsverbindung steht, vorgesehen ist, so daß ein eingestellter Druck von dem Differenzdruckregulierventil (14) über Leitungswege (17, 18) zu dem jeweiligen stabseitigen Ende der Zylinder (4, 5) geführt wird, daß eine als Nebelerzeugerdüse wirkende Mündung (23) vorgestehen ist, welche sich in den Tank (22) mit der zuzuführenden Flüssigkeit öffnet, daß die kopfseitigen Enden der Zylinder (4, 5) über weitere Rückschlagventile (25, 26) mit einem Leitungsweg (24) in Strömungsverbindung stehen, welcher zu der Mündung (23) führt, daß der wobei Leitungsweg (29) von dem Tank (22) zu einer Nebelzuführungöffnung (30) an dem Hauptluftströmungsweg (1) führt, und daß das Rückschlagventil (35) in dem Hauptluftströmungsweg (1) zwischen der Luftauslaufnahme (2) und der Nebelzuführungsöffnung (30) liegt.

## Claim

An apparatus for supplying liquid, comprising a main air passage (1), an air inlet port (2) provided in said main air passage (1), a duct line (3) in flow communication with said air inlet port (2), a tank (22) accommodating the liquid in flow communication with a line duct (29) including a check valve (28) for supplying the liquid to said main air passage (1), and comprising a check valve (35) in said main air passage (1) for precluding a flow back,

characterized in that

a pair of opposed boost-up pump cylinders (4,5)is provided the head side ends of which communicate respectively through check valves (20,21) with duct branching lines (3a,3b) branching from duct line (3),

that a pair of cylinders (4, 5) respectively receives pistons (8, 9) connected to each other by a rod (10), that respectively one control valve (11; 12) is provided at the stroke ends of the pistons (8, 9) and is controlled by both pistons (8, 9) by a directional control valve (13), that a differential pressure adjusting valve (4) in flow communication with the duct line (3) is provided so that an adjusted pressure from said differential pressure adjusting valve (14), through duct lines (17, 18), is led to the respective rod side end of the cylinders (4, 5), that a mist generator nozzle (23) is provided opening to the tank (22) of the liquid to be supplied, that the head side ends of the clyinders (4, 5), through further check valves (25, 26) are in flow communication with a line duct (24) leading to the nozzle (23), that the line duct (29) leads from said tank (22) to a flow exit port (30) provided on said main air passage (1), and that the check valve (35) is provided in said main air passage (1) between said air inlet port (2) and said flow outlet port (30).

## Revendication

Appareil d'alimentation de liquide, comportant un passage d'air principal (1), une entrée d'air (2) dans le passage d'air principal (1), comportant une ligne conductrice en communication avec l'entrée d'air (2), comportant un réservoir (22) recueillant le liquide en communication avec une ligne conductrice (29) ayant une soupape de retenue (28) pour l'alimentation du liquide au passage d'air principal (1), et comportant une soupape de retenue (35) dans le passage d'air principal (1) pour empêcher un retour de courant, caractérisé en ce qu'une paire de cylindres (4, 5) opposés d'une pompe d'amplification est prévue dont les extrémités à côté de tête respectivement par l'intermédiaire des soupapes de retenue (20, 21) sont en communication avec les lignes conductrices (3a, 3b) branchant de la ligne conductrice (3), que la paire des cylindres (4 ,5) chaque fois recueille des pistons (8, 9) raccordés l'un à l'autre par l'intermédiaire d'une barre (10), qu'une soupape de commande (11; 12) est chaque fois prévue aux bouts de course des pistons (8, 9) et par les deux pistons (8, 9) est commandés par l'intermédiaire d'une soupape de commande directionelle (13), qu'une soupape à régulier la pression différentielle (14) en communication avec la ligne conductrice (3) est prévue ainsi qu'une pression ajustée soit menée de la soupape à régler la pression différentielle (14) par l'intermédiaire des lignes conductrices (17, 18) à l'extrémité des cylindres (4, 5) à côté respectif de la barre, qu'une tuyère génératrice de brouillard (23) est prévue s'ébouchant au réservoir de liquide à alimenter, que les extrémités des cylindres (4, 5) à côté de tête, par l'intermédiaire d'autres soupapes de retenue (25, 26), sont en communication avec une ligne conductrice (24) menant à la tuyère (23), que la ligne conductrice (29) mène du réservoir (22) à une sortie (30) prévue au passage d'air principal (1) et que la soupape de retenue (35) est disposée dans le passage d'air principal (1) entre l'entrée d'air (2) et la sortie (30).

1